# EUROPÄISCHE PATENTANMELDUNG

(11) **EP 3 786 607 A1**
(43) Veröffentlichungstag der Anmeldung: **03.03.2021**
(21) Anmeldenummer: 19194385.1
(22) Anmeldetag: 29.08.2019
(51) Int. Cl.: G01M 13/04

(54) **VERFAHREN ZUR SCHADENSPROGNOSE AN EINER KOMPONENTE EINES WÄLZLAGERS**

(71) Anmelder: Flender GmbH, 46395 Bocholt (DE)
(72) Erfinder: Dinter, Ralf Martin, 45888 Gelsenkirchen (DE)
(74) Vertreter: Maier, Daniel Oliver

(57) **Zusammenfassung**

Die Erfindung betrifft ein Verfahren (100) zur Prognose eines Schädigungsmechanismus an einem Wälzlager (10) in zumindest einer ersten Mechanismusphase (42). Das Verfahren umfasst einen ersten Schritt (110) in dem ein Erfassen einer Mehrzahl an physikalischen Größen (30) zumindest einer Komponente (12, 14, 16, 17) des Wälzlagers (10) erfolgt. Es schließt sich ein zweiter Schritt (120) an, in dem ein Ermitteln zumindest einer ersten und zweiten Einflussgröße (52, 54) anhand der physikalischen Größen (30) durchgeführt wird. Es folgt ein dritter Schritt (130), in dem ein Ermitteln eines Schädigungsbeitrags (68) basierend auf der zumindest ersten und zweiten Einflussgröße (52, 54) und Addieren des Schädigungsbeitrags (68) zu einer Schädigungssumme (74) erfolgt. In einem vierten Schritt (140) erfolgt ein Ermitteln einer Restlebensdauer (77) der Komponente (12, 14, 16) des Wälzlagers (10) mittels der Schädigungssumme (74) und eines ersten Schadensakkumulationsmodells (71). Erfindungsgemäß handelt es sich beim Schädigungsmechanismus um einen White-Etching-Crack-Mechanismus. Die Erfindung betrifft auch ein Computerprogrammprodukt (80) zur Durchführung des Verfahrens (100) und eine Erfassungssystem (85) für ein Wälzlager (10) an einer Maschine (90). Ebenso betrifft die Erfindung eine Maschine (90), die über eine solches Erfassungssystem (85) verfügt.

## Beschreibung

Die Erfindung betrifft ein Verfahren zur Prognose eines Schädigungsmechanismus, der auf eine Komponente eines Wälzlagers einwirkt und sogenannte White Etching Cracks hervorruft. Die Erfindung betrifft auch ein Computerprogrammprodukt und eine Auswertungseinheit zur Durchführung eines solchen Verfahrens. Ferner betrifft die Erfindung ein korrespondierendes Erfassungssystem und eine Maschine, die mit einem solchen ausgestattet ist.

Aus der Druckschrift US 2017/0286572 A1 ist eine Vorrichtung bekannt, die zu einer Implementierung eines Digitalen Zwillings eines physikalischen Systems ausgebildet ist. Die Vorrichtung ist dazu eingerichtet, Messdaten von Sensoren zu empfangen und in einem Digitalen Zwilling zu verarbeiten. Der Digitale Zwilling ist auch dazu eingerichtet, beispielsweise eine voraussichtliche Restlebensdauer eines Teils des physikalischen Systems zu ermitteln.

Die Promotionsschrift "Tribological analysis of White Etching Crack (WEC) failures in rolling element bearings" von Arnaud Ruellan du Crehu am Institut National de Sciences Appliquees offenbart eine Untersuchung der WEC-Schädigung. Darin werden für den Einsatz von Wälzlagern in Windkraftanlagen auf S. 255 unterschiedliche wahrscheinlich maßgebliche physikalische Größen identifiziert.

Wälzlager werden in einer Vielzahl an Maschinen eingesetzt, die anspruchsvollen Betriebsbedingungen unterworfen sind und deshalb einer Vielzahl an Schädigungsmechanismen ausgesetzt sind, unter anderem auch dem White-Etching-Crack-Schädigungsmechanismus, kurz WEC-Mechanismus. Um einen zuverlässigen Betrieb gewährleisten zu können ist eine Prognose über den Schädigungsfortschritt erforderlich. Der vorliegenden Erfindung liegt die Aufgabe zugrunde, eine Möglichkeit zu schaffen, um für den WEC-Mechanismus eine derartige Prognose erstellen zu können.

Die Aufgabenstellung wird durch das erfindungsgemäße Verfahren gelöst, das zur Prognose eines Schädigungsmechanismus ausgebildet ist, der an einer Komponente eines Wälzlagers auftritt. Die Komponente des Wälzlagers kann beispielsweise ein Außenring, ein Innenring, oder ein Wälzkörper sein. In einer ersten Mechanismusphase wird ein erster Schritt durchgeführt, in dem eine Mehrzahl an physikalischen Größen am Wälzlager mittels Sensoren erfasst werden. In einem zweiten Schritt des Verfahrens erfolgt ein Ermitteln zumindest einer ersten und zweiten Einflussgröße, die relevant sind für den Schädigungsmechanismus. Die erste und zweite Einflussgröße werden basierend auf den im ersten Schritt erfassten physikalischen Größe ermittelt. Unter einer Einflussgröße ist somit im Wesentlichen eine abgeleitete Größe zu verstehen und/oder eine Größe am Wälzlager, die nicht direkt mittels eines Sensors erfassbar ist. In einem dritten Schritt erfolgt ein Ermitteln eines Schädigungsbeitrags basierend auf zumindest der ersten und zweiten Einflussgröße. Der Schädigungsbeitrag wird dabei für einen diskreten Zeitraum ermittelt und als Summand zu einer Schädigungssumme addiert. Die Schädigungssumme gehört zu einem ersten Schadensakkumulationsmodell, das einen Schädigungsfortschritt beschreibt. In einem vierten Schritt erfolgt ein Ermitteln einer Restlebensdauer der Komponente basierend auf der Schädigungssumme in Verbindung mit dem ersten Schadensakkumulationsmodell. Erfindungsgemäß ist der Schädigungsmechanismus ein White-Etching-Crack-Mechanismus, kurz WEC-Mechanismus. Der WEC-Mechanismus kann die Lebensdauer einer Komponente stark verkürzen, so dass eine Prognose über einen WEC-Mechanismus einen zuverlässigen Betrieb des Wälzlagers, und damit einer Maschine, erlaubt, indem gegebenenfalls zu stark beschädigte Wälzlager bzw. deren Komponenten ausgetauscht werden können.

In einer Ausführungsform des beanspruchten Verfahrens ist zumindest eine der physikalischen Größen ein Drehmoment, eine Temperatur, insbesondere eine Schmierstofftemperatur im Wälzlager oder eine Lagertemperatur, eine Drehzahl, eine Drehbeschleunigung, eine außen über das Wälzlager hinweg vorliegende Stromstärke und/oder eine Polarität eines elektrischen Stroms. Für derartige Größen sind kompakte und kosteneffiziente Sensoren verfügbar, die hinreichend präzise Messwerte erzeugen. Ferner ist eine Vielzahl an Einflussgrößen eines WEC-Mechanismus in einfacher Weise aus den beschriebenen physikalischen Größen ermittelbar.

Darüber hinaus kann die zumindest erste Einflussgröße eine Hertz'sche Pressung sein, die an einem rollenden Kontakt der entsprechenden Komponente vorliegt, eine an der Komponente vorliegende Schmierfilmhöhe, ein Schlupf, eine Lagertemperatur und/oder eine Schmierstofftemperatur. Die Hertz'sche Pressung kann im Wesentlichen basierend auf einem im Wälzlager vorliegenden Drehmoment ermittelt werden. Dazu kann am Wälzlager eine Lagerkraft ermittelt werden, aus der beispielsweise im Zusammenspiel mit einer Kontaktsimulation zwischen einem Wälzkörper und einem Innenring oder einem Außenring das Drehmoment ermittelbar ist. Bei der Ermittlung des Drehmoments, und somit auch der Hertz'schen Pressung, werden Typeninformationen des Wälzlagers einbezogen. Eine Typeninformation eines Wälzlagers kann eine Makrogeometriegröße wie eine Größenangabe für zumindest eine Komponente des Wälzlagers oder eine Angabe einer Beschreibung einer Laufflächenform umfassen, einer Mikrogeometriegröße wie eine Oberflächenrauigkeit, einer Materialinformation, eine Beschichtungsinformation, eine Schmierstoffzusammensetzung, wie beispielweise eine Angabe über Additive, eine Kinematikinformation, oder eine Kombination hieraus umfassen. Die Schmierfilmhöhe wiederum ist basierend auf dem Drehmoment, der Drehzahl und der Schmierstofftemperatur in Kombination ermittelbar. Der Schlupf an einer Komponente ist anhand einer Kombination aus dem Drehmoment, der Drehbeschleunigung, der Schmierstofftemperatur ermittelbar. Darüber hinaus ist eine Stromstärke in einer Komponente des Wälzlagers anhand eines entsprechenden Modells basierend auf der außen über das Wälzlager hinweg vorliegenden Stromstärke ermittelbar.

Ein Vorliegen eines aktuellen Betriebszustands, in dem für den WEC-Mechanismus ein Schädigungsbeitrag überhaupt und gegebenenfalls in welcher Intensität vorliegt, wird durch den Schädigungsbeitrag dargestellt. Dieser ist basierend auf einer Hertz'schen Pressung, einem Schlupf am Wälzlager, und einer Schmierfilmhöhe ermittelbar. Diese Einflussgrößen sind in einfacher Weise schnell ermittelbar und im ersten Schadensackumulationsmodell verarbeitbar. Ferner sind diese Einflussgrößen aus lediglich Drehzahl, Drehbeschleunigung, Drehmoment und Schmierstofftemperatur ermittelbar. Alternativ kann der Schädigungsbeitrag basierend auf einer Hertz'schen Pressung, einem Schlupf am Wälzlager, einer Schmierfilmhöhe, und/oder einer Stromstärke in einer Komponente des Wälzlagers ermittelt werden. Dabei wird dementsprechend ein zweites Schadenakkumulationsmodell verwendet. Durch die Stromstärke als zusätzlicher Einflussgröße wird mit einem geringen Mehraufwand die Genauigkeit des beanspruchten Verfahrens gesteigert.

Bei einer weiteren Ausführungsform des beanspruchten Verfahrens kann der zweite Schritt, in dem zumindest die erste und zweite Einflussgröße ermittelt werden, kontinuierlich mittels eines digitalen Abbilds des Wälzlagers durchgeführt werden. Unter einem digitalen Abbild, auch Digitaler Zwilling genannt, ist eine im Wesentlichen dauerhaft ablaufende Simulation zu verstehen, die verfahrensrelevante physikalische Vorgänge simuliert. Das digitale Abbild bzw. der Digitale Zwilling kommt im beanspruchten Verfahren mit einer reduzierten Anzahl an physikalischen Größen und Einflussgrößen aus. Das digitale Abbild ist beim beanspruchten Verfahren entsprechend kompakt und kann auch auf einfacher Hardware mit geringer Rechenleistung schnell ausgeführt werden. Dies erlaubt eine kosteneffiziente Implementierung in Hardware, die auch im Feld eingesetzt werden kann. Infolgedessen kann ein Wälzlager mittels des beanspruchten Verfahrens im Wesentlichen in Echtzeit auf Schädigungen aus einem WEC-Mechanismus überwachen. Alternativ kann das digitale Abbild auch in einem Physik-Modul ausgebildet sein, das zu einer komplexen Simulationsumgebung gehört. Derartige Simulationsumgebungen sind dazu eingerichtet, in eine Internet-of-Things-Softwareumgebung, kurz IoT-Umgebung, wie beispielsweise Siemens Mindsphere, eingebunden zu werden. Dies erlaubt eine umfassende Überwachung eines entsprechenden Wälzlagers. Alternativ oder ergänzend kann das Ermitteln der ersten und zweiten Einflussgröße auch anhand eines mehrdimensionalen Kennfeldes erfolgen. Ein derartiges mehrdimensionales Kennfeld kann beispielsweise durch eine separate Simulation vor dem Einsatz im Feld ermittelt werden. Dadurch kann Simulationsaufwand im Betrieb eingespart werden und der Ablauf des Verfahrens weiter beschleunigt werden und beispielsweise dessen Echtzeitfähigkeit verbessern.

Darüber hinaus kann die Komponente des Wälzlagers, bei der eine Schädigung durch einen WEC-Mechanismus prognostiziert wird, ein Außenring, ein Innenring oder eine Wälzkörper eines Wälzlagers sein. Außenringe und Innenringe sind über ihre Außen- und Innendurchmesser und die Form der daran ausgebildeten Lauffläche geometrisch im Wesentlichen komplett beschreibbar. Genauso sind Wälzkörper mit einer geringen Anzahl an Außenabmessungen geometrisch vollständig beschreibbar. Dementsprechend kann das Verfahren in einfacher Weise mit einer reduzierten Anzahl an Angaben über die Komponente selbst durchgeführt werden. Ferner tritt eine Schädigung durch einen WEC-Mechanismus häufig an einer Lauffläche eines Außenrings oder Innenrings auf. Das beanspruchte Verfahren ist somit gezielt auf die für den WEC-Mechanismus anfälligsten Komponenten ausgelegt. Ebenso kann durch ein gleichzeitiges Anwenden des beanspruchten Verfahrens auf mehrere der Komponenten eine Prognose erstellt werden, welche der Komponenten zuerst durch den WEC-Mechanismus hinreichend geschädigt wird. Je nach Betriebsbedingung, Anwendungsfall und Wälzlager können unterschiedliche Komponenten zuerst ausfallen. Das beanspruchte Verfahren weist daher ein breites Einsatzspektrum auf.

Des Weiteren kann im vierten Schritt die Restlebensdauer der Komponente anhand einer Tabelle, einer Funktion, eines Algorithmus, und/oder einer Betriebssimulation durchgeführt werden. Tabellenwerte können in einfacher Weise aus Experimentergebnissen abgeleitet werden. Funktionen, die eine Prognose einer Restlebensdauer einer Komponente liefern, sind aus anderen Applikationen bekannt und sind mit geringem experimentellem Aufwand an das beanspruchte Verfahren anpassbar. Das Gleiche gilt für Algorithmen, bei denen zusätzlich ein zu erwartendes künftiges Belastungsregime der Komponente einstellbar ist. Beispielsweise kann jeweils die Anzahl an Durchgängen von Belastungen in unterschiedlichen Lastkategorien erfasst werden. Unter den Lastkategorien sind Größenkategorien beispielsweise für ein vorliegenden Drehmoment zu verstehen. Unter der Annahme, dass die Anzahlverhältnisse für die einzelnen Lastkategorien im Wesentlichen gleichbleibend sind und lediglich die Anzahlen der Durchgänge von Belastungen ansteigt, ist so eine Ermittlung der Restlebensdauer durchführbar. Eine Betriebssimulation wiederum kann in einfacher Weise Daten über einen geplanten Betrieb der Maschine heranziehen, die mit dem Wälzlager ausgestattet ist. Dies kann beispielsweise anhand von Daten aus einer Steuereinheit der Maschine erfolgen. Dadurch ist beispielsweise der Zeitpunkt, zu dem ein Austausch des Wälzlagers geboten ist, besonders genau bestimmbar, und somit die Lebensdauer des Wälzlagers trotz vorliegendem WEC-Mechanismus weitgehend ausnutzbar. Dies erlaubt einen zuverlässigen und zugleich wirtschaftlichen Betrieb der Maschine mit dem Wälzlager.

Beim beanspruchten Verfahren kann die anhand des ersten oder zweiten Schadensakkumulationsmodell ermittelte Restlebensdauer an einen Benutzer, eine Auswertungseinheit, und/oder eine Steuereinheit einer Maschine ausgegeben, die mit dem Wälzlager ausgestattet ist. Basierend hierauf kann insbesondere eine Warnung ausgegeben werden, ein Halt der Maschine ausgelöst werden, eine Betriebsbeschränkung, wie beispielsweise ein reduziertes Höchstdrehmoment oder eine reduzierte Höchstdrehzahl, eingerichtet werden, und/oder eine Betriebsplanung der Maschine in deren Steuereinheit angepasst werden. Alternativ oder ergänzend kann auch ein Wartungsvorgang angefordert werden oder für ein notwendiges Ersatzteile eine Bevorratungsanweisung ausgegeben werden. Dadurch ist ein zuverlässiger und gleichzeitig wirtschaftlicher Betrieb der Maschine mit dem Wälzlager erzielbar.

Die zugrundeliegende Aufgabenstellung wird auch durch das erfindungsgemäße Computerprogrammprodukt gelöst. Das Computerprogrammprodukt ist zu einer nichtflüchtigen Speicherung und zu einem Ausführen in einer Auswertungseinheit ausgebildet, die mit einer Maschine koppelbar ist. Dazu kann das Computerprogrammprodukt ganz oder teilweise als Software ausgebildet sein. Alternativ oder ergänzend kann das Computerprogrammprodukt auch festverdrahtet, beispielsweise als Chip oder FPGA, ausgebildet sein. Das Computerprogrammprodukt kann monolithisch oder als mehrere Teilprogramme ausgebildet sein, die auf separater Hardware ausführbar sind und die im Betrieb kommunikativ gekoppelt sind. Beispielweise kann das Computerprogrammprodukt in Form von Teilprogrammen, die in der Auswertungseinheit, in der Steuereinheit in der Maschine selbst und/oder auf einem Server einer Computer-Cloud ausgeführt werden. Das Computerprogrammprodukt ist zu einem Empfangen und Verarbeiten von Messwerten von physikalischen Größen ausgebildet. Ferner kann das Computerprogrammprodukt zum Ausgeben einer Warnung ausgebildet sein. Erfindungsgemäß ist das Computerprogrammprodukt dazu eingerichtet, zumindest ein Verfahren gemäß einer der oben skizzierten Ausführungsforen auf der Auswertungseinheit auszuführen.

Gleichermaßen wird die Aufgabenstellung durch die erfindungsgemäße Auswertungseinheit gelöst, die einen nichtflüchtigen Speicher und eine Recheneinheit aufweist. Die Auswertungseinheit ist durch entsprechende Anschlüsse zu einem Verbinden mit Sensoren geeignet, die dazu ausgebildet sind, physikalische Größen zu erfassen. Die Auswertungseinheit ist erfindungsgemäß mit einem Computerprogrammprodukt ausgestattet, das nach einer der oben dargestellten Ausführungsformen ausgebildet ist. Die Auswertungseinheit kann ferner dazu ausgebildet sein, eine Maschine, mit der sie verbunden ist, im bestimmungsgemäßen Betrieb zu steuern. Die Auswertungseinheit kann unmittelbar der Maschine zugeordnet sein und/oder mit einer übergeordneten Steuereinheit ausgebildet sein, die über eine kommunikative Datenverbindung mit der Maschine gekoppelt ist. Eine übergeordnete Steuereinheit kann beispielsweise ein Leitrechner sein oder eine Computer-Cloud.

Die skizzierte Aufgabenstellung wird auch durch das erfindungsgemäße Erfassungssystem gelöst. Das Erfassungssystem umfasst eine Auswertungseinheit, die zu einem Erfassen von physikalischen Größen an einem Wälzlager ausgebildet ist. Dazu ist die Auswertungseinheit mit einer Mehrzahl an Sensoren verbunden. Erfindungsgemäß ist die Auswertungseinheit nach einer der oben dargestellten Ausführungsformen ausgebildet.

Ebenso wird die Aufgabe von der erfindungsgemäßen Maschine gelöst. Die Maschine weist eine drehbare Welle und/oder ein Zahnrad, beispielsweise ein Planetenrad auf, die bzw. das in einem Wälzlager aufgenommen ist. Zumindest eine Komponente des Wälzlagers ist mit einem Erfassungssystem verbunden, das nach einer der oben beschriebenen Ausführungsformen ausgebildet ist. Die Maschine kann dabei jegliche Vorrichtung sein, in der Wellen drehbar in Wälzlagern aufgenommen sind, beispielsweise Getriebe, Planetengetriebe, Industriegetriebe, oder Elektromotoren. Eine derartige Maschine ist mittels des Erfassungssystems zuverlässig und wirtschaftlich betreibbar.

Die Erfindung wird im Folgenden anhand einzelner Ausführungsformen beschrieben. Die Merkmale der einzelnen Ausführungsformen sind dabei untereinander und mit den oben skizzierten Ausführungsformen kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: einen schematischen Ablauf einer ersten Ausführungsform des beanspruchten Verfahrens;
- FIG 2: einen schematischen Ablauf einer zweiten Ausführungsform des beanspruchten Verfahrens;
- FIG 3: einen schematischen Aufbau einer Ausführungsform der beanspruchten Maschine.

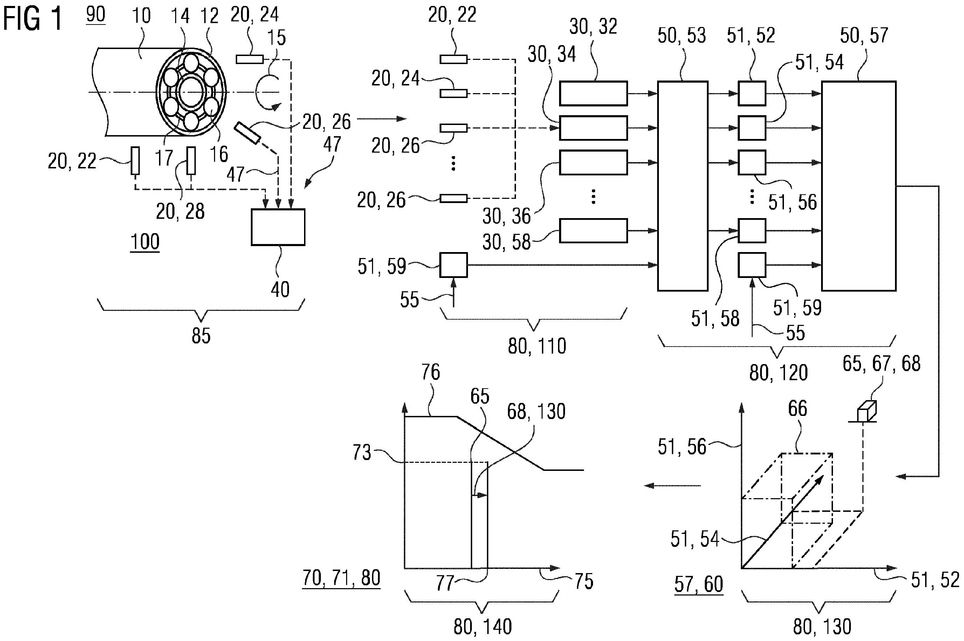

FIG 1 zeigt schematisch einen Ablauf einer ersten Ausführungsform des beanspruchten Verfahrens 100. Das Verfahren 100 ist darauf gerichtet, einen WEC-Mechanismus an einem Wälzlager 10 zu prognostizieren, das zu einer nicht näher dargestellten Maschine 90 gehört. Das Wälzlager 10 weist einen Außenring 12, einen Innenring 14, eine Mehrzahl dazwischen angeordneter Wälzkörper 16 und einen Käfig 17 auf. Zwischen dem Außenring 12 und den Innenring 14 tritt im Betrieb eine relative Drehung 15 auf. Dem Wälzlager 10 ist eine Mehrzahl an Sensoren 20 zugeordnet, mit denen unterschiedliche physikalische Größen 30 am Wälzlager 10 erfassbar sind. Zu den Sensoren 20 gehören ein Drehzahlsensor 22, ein Temperatursensor 24, ein Drehmomentsensor 26 und ein weiterer Sensor 28. Der Drehzahlsensor 26 kann einer nicht näher gezeigten Welle zugeordnet sein und dadurch das Drehmoment am Wälzlager 10 ermitteln. Der Temperatursensor 24 ist zu einem Erfassen einer Schmierstofftemperatur und/oder einer Lagertemperatur ausgebildet. Die Sensoren 20 sind mit einer Auswertungseinheit 40 verbunden, die dazu eingerichtet ist, Messwerte 47 von den Sensoren 20 zu empfangen und zu verarbeiten. Die Auswertungseinheit 40 ist dazu ausgebildet, ein Computerprogrammprodukt 80 ausführbar zu speichern, mit dem das beschriebene Verfahren 100 umgesetzt wird. Die Sensoren 20 und die Auswertungseinheit 40 mit dem Computerprogrammprodukt 80 gehören zu einem Erfassungssystem 85 für die Maschine 90. Ausgehend hiervon wird ein erster Schritt 110 durchgeführt, in dem durch die Sensoren 20 am Wälzlager 10 eine Mehrzahl an Messwerten 47 erfasst wird und der Auswertungseinheit 40 als physikalische Größen 30 zur Verfügung gestellt werden. Die physikalischen Größen 30 umfassen eine Drehzahl 42, aus der auch eine Drehbeschleunigung ableitbar ist, eine Schmierstofftemperatur 34, ein Drehmoment 36 und mindestens eine weitere physikalische Größe 38. Die physikalischen Größen 30 dienen als Eingabewerte für ein Physik-Modul 53 eines digitalen Abbilds 50, das auch als Digitaler Zwilling bezeichnet wird.

Im Physik-Modul 53 werden in einem zweiten Schritt 120 des Verfahrens 100 aus den physikalischen Größen 30 Einflussgrößen 51 ermittelt. Dazu werden auch Typeninformationen 59 für das Physik-Modul 53 mittels einer Speicherabfrage 55 vom Computerprogrammprodukt 80 zur Verfügung gestellt. Zu den Einflussgrößen 51 gehört eine Hertz'sche Pressung 52 an einem rollenden Kontakt im Wälzlager 10, eine Schmierfilmhöhe 54, ein Schlupf 56 im Wälzlager 10 und mindestens eine weitere Einflussgröße 58. Als weitere Einflussgrößen 58 können auch physikalische Größen 30 dienen, die von den Sensoren 20 erfasst sind. So können als zusätzliche Einflussgrößen 58 eine Schmierstofftemperatur 34, eine Stromstärke über das Wälzlager 10 hinweg, und/oder eine Polarität dieses elektrischen Stroms dienen. Zusätzlich wird auch im zweiten Schritt 120 eine Typeninformation 59 durch eine Speicherabfrage 55 vom Computerprogrammprodukt 80 zur Verfügung gestellt.

Die Einflussgrößen 51 und die Typeninformation 59 werden in einem dritten Schritt 130 als Eingabewerte für ein Zustandsmodul 57 des digitalen Abbilds 50 eingesetzt. Das Zustandsmodul 57 ist dazu eingerichtet, zu ermitteln, ob ein für den WEC-Mechanismus relevanter Betriebszustand im Wälzlager 10 vorliegt. Ein aktueller Zustand 65 des Wälzlagers 10 wird basierend auf den Einflussgrößen 51 Hertz'sche Pressung 52, Schmierfilmhöhe 54 und Schlupf 56 ermittelt. Basierend hierauf ergibt sich ein mehrdimensional, insbesondere mindestens zweidimensional, darstellbarer aktueller Zustand 65, der in einem unkritischen Bereich 66 liegen kann, in dem keine Schädigung durch den WEC-Mechanismus auftritt. Dementsprechend beträgt ein Gewichtungsfaktor 67 im unkritischen Bereich 66 Null. Außerhalb des unkritischen Bereichs 66 erfolgt ein Fortschritt des WEC-Mechanismus in der ersten Mechanismusphase 42. Einem aktuellen Zustand 65 außerhalb des unkritischen Bereichs 66 weist einen Gewichtungsfaktor 67 ungleich Null auf. Daraus ergibt sich im dritten Schritt 130 ein Schädigungsbeitrag 68, um den der WEC-Mechanismus im aktuellen Zustand 65 fortschreitet.

In einem vierten Schritt 140 wird der Schädigungsbeitrag 68 in einem ersten Schadensakkumulationsmodell 71 zu einer Schädigungssumme 74 addiert. Das erste Schadensakkumulationsmodell 71 weist eine Kennlinie 76 auf, anhand der im Sinne einer Wöhlerlinie eine verbleibende Restlebensdauer 77 der Komponente des Wälzlager 10 in Form einer Lastwechselzahl 75 bei einem bestimmten Lastniveau 73 ermittelbar ist. Die so ermittelte Restlebensdauer 77 kann an einen Benutzer ausgegeben werden oder eine Warnung ausgegeben werden, wenn die Restlebensdauer 77 einen einstellbaren Warnschwellenwert unterschreitet.

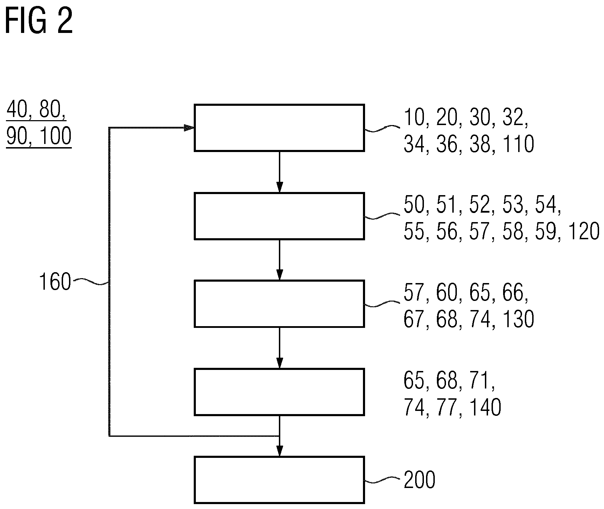

In FIG 2 ist schematisch der Ablauf einer zweiten Ausführungsform des beanspruchten Verfahrens 100 dargestellt, mit dem ein Schädigungsfortschritt eines WEC-Mechanismus zu erfassen und zu prognostizieren ist. Das Verfahren 100 wird mittels eines Computerprogrammprodukts 80 durchgeführt, das in nicht-flüchtiger Form auf einer Steuereinheit 40 gespeichert und ausgeführt wird. Die Steuereinheit 40 ist dabei einer nicht näher dargestellten Maschine 90 zugeordnet. Es erfolgt ein erster Schritt 110, in dem an einem Wälzlager 10 mittels zugeordneter Sensoren 20 eine Mehrzahl an physikalischen Größen 30 erfasst werden. Zu den physikalischen Größen 30 können beispielsweise eine Drehzahl 32 des Wälzlagers 10, eine vorliegende Schmierstofftemperatur 34, ein auf das Wälzlager 10 einwirkendes Drehmoment 36, oder eine weitere physikalische Größe 38 sein. Die erfassten physikalischen Größen 30 werden in einem darauffolgenden zweiten Schritt 120 als Grundlage genutzt, um zumindest eine Mehrzahl an Einflussgrößen 51 zu ermitteln. Zu den Einflussgrößen 51 kann als erste Einflussgröße 52 eine Hertz'sche Pressung gehören, als zweite Einflussgröße 54 eine Schmierfilmhöhe, oder als dritte Einflussgröße 56 ein Schlupf am Wälzlager 10, oder eine weitere Einflussgröße 58. Die Einflussgrößen 51 werden basierend auf den im ersten Schritt 110 erfassten physikalischen Größen 30 mittels eines digitalen Abbilds 50 ermittelt, das auch als Digitaler Zwilling bezeichnet wird. Dazu umfasst das digitaler Abbild 50, das im Wesentlichen an dauerhaft ablaufende Simulation ausgebildet ist, ein Physik-Modul 53, das dazu geeignet ist, physikalische Größen 30 zu empfangen und zu verarbeiten. Insbesondere ist durch das Physik-Modul 53 aus einer über das Wälzlager 10 hinweg anliegenden Stromstärke eine Stromstärke ermittelbar, die in einer Komponente 12, 14, 16, 17 des Wälzlagers 10 vorliegt. Dies erfolgt beispielsweise durch Simulation. Die mittels des Physik-Moduls 53 des digitalen Abbilds 50 ermittelten Einflussgrößen 51 werden im zweiten Schritt 120 ferner mit einer Typeninformation 59 kombiniert, die auch eine Einflussgröße 51 ist. Die Typeninformation 59 wird mittels einer Speicherabfrage 55 bereitgestellt und beschreibt Daten, die für das Wälzlager 10 charakteristisch sind. Die Kombination der vorliegenden Einflussgrößen 51 bildet den Zustand des Wälzlagers 10 in einem Zustandsmodul 57 des digitalen Abbilds 50 ab. Insgesamt ist aus dem Zustandsmodul 57 im zweiten Schritt 120 ein aktueller Zustand 65 des Wälzlagern 10 ableitbar.

Im dritten Schritt 130 wird der aktuelle Zustand 65 des Wälzlagers 10 basierend auf dem Zustandsmodul 57 des digitalen Abbilds 50 ermittelt. Dabei wird die Lage des aktuellen Zustands 65 in einem Zustandsraum 60, der im Wesentlichen sämtliche technisch sinnvolle Betriebszustände umfasst, bestimmt. Es wird ermittelt, ob der aktuelle Zustand 65 innerhalb eines unkritischen Bereichs 66 liegt, in dem der WEC-Mechanismus nicht fortschreitet. Wenn der aktuelle Zustand 65 außerhalb des unkritischen Bereichs 66 liegt, werden ein Gewichtungsfaktor 67 und ein Schädigungsbeitrag 68 ermittelt, um den der WEC-Mechanismus vorangetrieben wird. Ferner wird der Schädigungsbeitrag 68 zu einer vorliegenden Schädigungssumme 74 addiert, die in der ersten Mechanismusphase 42 den Fortschritt eines ersten Schadensakkumulationsmodells 71 beschreibt.

In einem vierten Schritt 140 wird basierend auf dem ersten Schadensakkumulationsmodell 71, ausgehend vom aktuellen 65 und dem korrespondierenden Schädigungsbeitrag 68, eine Restlebensdauer 77 des Wälzlagers 10 ermittelt. Die Restlebensdauer 77 des Wälzlagers 10 kann dabei als Information an einen Benutzer oder eine Datenbank ausgegeben werden. Danach tritt das Verfahren in einen Endzustand 200. Der erste, zweite, dritte und vierte Schritt 110, 120, 130, 140 sind dauerhaft in einer Schleife 160 durchführbar um so eine dauerhafte Erfassung des Wälzlagers 10 zu verwirklichen.

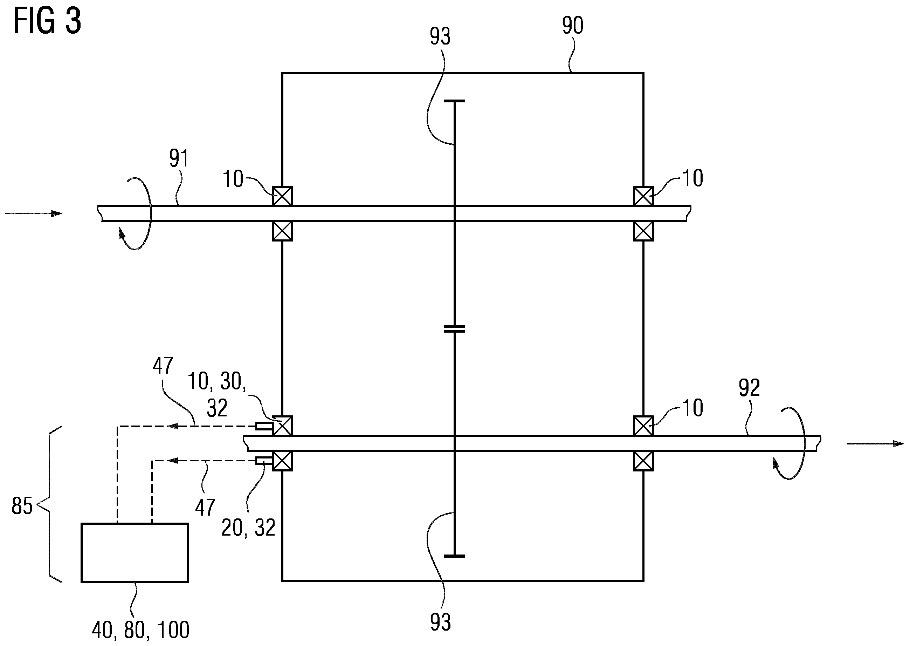

FIG 3 zeigt schematisch den Aufbau einer Ausführungsform der beanspruchten Maschine 90. Die Maschine 90 ist als Getriebe ausgebildet und verfügt über mindestens eine Eingangswelle 91 und mindestens eine Ausgangswelle 92, die über Zahnräder 93 miteinander verbunden sind. Die Eingangswelle 91 und die Ausgangswelle 92 sind drehbar und jeweils in Wälzlagern 10 aufgenommen. Ein Wälzlager 10 ist mit Sensoren 20 ausgestattet, die dazu ausgebildet sind, physikalische Größen 30 am Wälzlager 10, insbesondere ein Drehmoment 32, zu erfassen und als Messwerte 47 eine Steuereinheit 80 weiterzuleiten. Die Auswertungseinheit 40 wiederum verfügt über ein Computerprogrammprodukt 80, das dazu ausgebildet ist, ein oben skizzierte Verfahren 100 zur Prognose einer Schädigung durch einen WEC-Mechanismus auszuführen. Die Auswertungseinheit 40 mit dem Computerprogrammprodukt 80 und die Sensoren 20 gehören zu einem Erfassungssystem 85, mit dem die Maschine 90 ausgestattet ist.

## Patentansprüche

1. Verfahren (100) zur Prognose eines Schädigungsmechanismus an einem Wälzlager (10), umfassend die Schritte:
a) Erfassen einer Mehrzahl an physikalischen Größen (30) zumindest einer Komponente (12, 14, 16) des Wälzlagers (10);
b) Ermitteln zumindest einer ersten und zweiten Einflussgröße (52, 54) anhand der physikalischen Größen (30) und einer Typeninformation (59) des Wälzlagers (10);
c) Ermitteln eines Schädigungsbeitrags (68) basierend auf der zumindest ersten und zweiten Einflussgröße (52, 54) und Addieren des Schädigungsbeitrags (68) zu einer Schädigungssumme (74);
d) Ermitteln einer Restlebensdauer (77) der Komponente (12, 14, 16) des Wälzlagers (10) mittels der Schädigungssumme (74) und eines ersten Schadensakkumulationsmodells (71);
**dadurch gekennzeichnet, dass** der Schädigungsmechanismus ein White-Etching-Crack-Mechanismus ist.

2. Verfahren (100) nach Anspruch 1, **dadurch gekennzeichnet, dass** zumindest eine der physikalischen Größen (30) ein Drehmoment (32), eine Temperatur (34), eine Drehzahl (36), eine Drehbeschleunigung, eine Stromstärke, und /oder eine Polarität eines elektrischen Stroms ist.

3. Verfahren (100) nach Anspruch 1 oder 2, **dadurch gekennzeichnet, dass** die zumindest erste Einflussgröße (52) eine Hertz'sche Pressung, eine Schmierfilmhöhe, ein Schlupf, eine Schmierstofftemperatur, und/oder eine Stromstärke in einer Komponente (12, 14, 16) des Wälzlagers (10) ist.

4. Verfahren (100) nach einem der Ansprüche 1 bis 3, **dadurch gekennzeichnet, dass** der Schädigungsbeitrag (68) in Schritt c) anhand zumindest der Hertz'schen Pressung, des Schlupfs, der Schmierfilmhöhe und der Schmierstofftemperatur oder anhand zumindest der Hertz'schen Pressung, des Schlupfs, der Schmierfilmhöhe, der Schmierstofftemperatur und/oder der Stromstärke in der Komponente (12, 14, 16) des Wälzlagers (10) ermittelt wird.

5. Verfahren (100) nach einem der Ansprüche 1 bis 4, **dadurch gekennzeichnet, dass** der Schritt b) anhand eines digitalen Abbilds (50) des Wälzlagers (10) kontinuierlich durchgeführt wird und/oder anhand eines mehrdimensionalen Kennfeldes.

6. Verfahren (100) nach einem der Ansprüche 1 bis 5, **dadurch gekennzeichnet, dass** die Komponente (12, 14, 16) des Wälzlagers (10) ein Innenring (14), ein Außenring (12), oder ein Wälzkörper (16) des Wälzlagers (10) ist.

7. Verfahren (100) nach einem der Ansprüche 1 bis 6, **dadurch gekennzeichnet, dass** Schritt d) anhand einer Tabelle, einer Funktion, eines Algorithmus und/oder einer Betriebssimulation durchgeführt wird.

8. Verfahren (100) nach einem der Ansprüche 1 bis 7, **dadurch gekennzeichnet, dass** die anhand des ersten oder eines zweiten Schadensakkumulationsmodells (71, 72) ermittelte Restlebensdauer (77) an einen Benutzer, eine Auswertungseinheit (40) und/oder eine Steuereinheit einer Maschine (90) ausgegeben wird.

9. Computerprogrammprodukt (80) zur nichtflüchtigen Speicherung und Ausführung in einer Auswertungseinheit (40), das zu einem Empfangen und Verarbeiten von Messwerten (47) von physikalischen Größen (30) ausgebildet ist, **dadurch gekennzeichnet, dass** das Computerprogrammprodukt (80) zum Durchführen eines Verfahrens (100) nach einem der Ansprüche 1 bis 8 ausgebildet ist.

10. Auswertungseinheit (40), umfassend einen nichtflüchtigen Speicher und eine Recheneinheit, die zu einem Verbinden mit Sensoren (20) für physikalische Größen (30) ausgebildet ist und mit einem Computerprogrammprodukt (80) zum Verarbeiten von Messwerten (47) der physikalischen Größen (30) ausgestattet ist, **dadurch gekennzeichnet, dass** das Computerprogrammprodukt (80) nach Anspruch 9 ausgebildet ist.

11. Erfassungssystem (85), umfassend eine Auswertungseinheit (40), die mit einer Mehrzahl an Sensoren (20) verbindbar ist, die zu einem Erfassen von physikalischen Größen (30) an einer Komponente (12, 14, 16) eines Wälzlagers (10) ausgebildet sind, **dadurch gekennzeichnet, dass** die Auswertungseinheit (40) nach Anspruch 10 ausgebildet ist.

12. Maschine (90), umfassend zumindest eine drehbare Welle (91, 92), die in einem Wälzlager (10) aufgenommen ist, wobei zumindest eine Komponente (12, 14, 16) des Wälzlagers (10) mit einem Erfassungssystem (85) zur Prognose eines Schädigungsmechanismus ausgestattet ist, **dadurch gekennzeichnet, dass** das Erfassungssystem (85) nach Anspruch 11 ausgebildet ist.
